# EUROPÄISCHE PATENTSCHRIFT

(11) **EP 0 900 438 B1**
(45) Veröffentlichungstag und Bekanntmachung des Hinweises auf die Patenterteilung: **11.06.2003**
(21) Anmeldenummer: 97923832.6
(22) Anmeldetag: 22.05.1997
(51) Int. Cl.: G11B 23/40, B65C 11/00

(54) **VERFAHREN UND VORRICHTUNG ZUM BEKLEBEN EINES SCHEIBENFÖRMIGEN INFORMATIONSTRÄGERS MIT EINEM ETIKETT UND EINER ZENTRIERHILFE**
PROCESS AND DEVICE FOR APPLYING BY ADHESION OF DISC-SHAPED INFORMATION MEDIUM WITH A LABEL BY MEANS OF A CENTRING AID
PROCEDE ET DISPOSITIF POUR LE COLLAGE D'UNE ETIQUETTE SUR UN SUPPORT D'INFORMATIONS EN FORME DE DISQUE AU MOYEN D'UN ELEMENT AUXILIAIRE DE CENTRAGE

(30) Priorität: 22.05.1996 DE 19620629; 11.03.1997 DE 29704279 U
(43) Veröffentlichungstag der Anmeldung: 10.03.1999
(60) Teilanmeldung: 02022569.4
(73) Patentinhaber: Phonosound Musikproduktions GmbH, 82239 Alling (DE)
(72) Erfinder: FLIEGEL, Erwin, D-82239 Alling (DE)
(74) Vertreter: Söffge, Karen
(86) Internationale Anmeldenummer: DE9701036
(87) Internationale Veröffentlichungsnummer: WO97044787

(56) Entgegenhaltungen:
- EP-A- 0 418 608
- DE-U- 29 610 120
- DE-U- 29 615 777
- DE-U- 29 615 950
- DE-U- 29 702 498
- GB-A- 2 212 133
- US-A- 5 316 464
- US-A- 5 340 427

## Beschreibung

Die vorliegende Erfindung befasst sich mit einem Verfahren und einer Vorrichtung zur individuellen Kennzeichnung von scheibenförmigen Informationsträgern, insbesondere mit einer Vorrichtung zum blasenfreien Aufkleben eines Etiketts, das in einem vorangegangenen Arbeitsschritt individuell bedruckt wurde.

Derartige Vorrichtungen und Verfahren sind im Stand der Technik bekannt. Die im Stand der Technik bekannten Verfahren und Vorrichtungen zur Etikettierung scheibenförmiger Informationsträger sind technisch aufwendig und machen komplizierte Apparaturen erforderlich, um überhaupt das Etikett auf die Oberfläche des Informationsträgers blasenfrei aufzubringen. Die Druckschrift US 5,316,464 zeigt beispielsweise eine zangenartige Vorrichtung, um einen Plastikring auf die Innenfläche einer Compact Disk (CD) aufzubringen. Mit der Innenfläche ist hier die Fläche gemeint, die vom Rand des Zentrallochs bis etwa 44 mm im Durchmesser auf der CD umfasst wird. Gemäß dieser Druckschrift wird das aufzubringende Etikett in einen Rahmen eingespannt und mit dem Zangenmechanismus, der hinreichend kompliziert ist, parallel zur Oberfläche des Informationsträgers flach und möglichst ohne Krümmungen auf den Informationsträger bzw. die Compact Disk (CD) aufgedrückt. Die Apparatur bzw. Vorrichtung nach dieser Druckschrift ist elektrisch bzw. automatisch betrieben.

Der DE 296 10 120 ist eine Vorrichtung zu entnehmen, die zwar von Hand zu betätigen ist, jedoch eine Zentrierhilfe zum Einsatz in das Zentralloch des Informationsträgers benötigt, die nur im Zusammenhang mit der Vorrichtung verwendet werden kann. Das aufzubringende Etikett wird während des Aufbringvorgangs nicht mit den Händen erfasst, sondern die Enden des ringscheibenförmigen Etiketts liegen auf der Oberfläche der Apparatur stumpf auf, so dass beim Drücken des Stempels, auf dem der Informationsträger locker aufliegt, willkürlich Teile des klebenden Etiketts mit der zu beschriftenden Oberfläche des Informationsträgers aufeinander treffen, so dass ein blasenfreies Aufbringen zumindest nicht gewährleistet ist. Ferner werden die stumpf auf der Oberfläche aufliegenden Enden des Etiketts infolge zufälliger Reibungen, die nicht gleichmäßig sind, unterschiedlich nach außen bewegt, wodurch ebenfalls Schwierigkeiten zur blasenfreien Auftragung des Etiketts auf die Oberfläche des Informationsträgers entstehen.

Nachteilig an den oben genannten Verfahren und Vorrichtungen wird im allgemeinen empfunden, dass infolge äußerer Einwirkungen, die im einzelnen nicht kontrollierbar sind, sich während des Aufklebevorgangs Blasen zwischen der CD und dem aufzuklebenden Etikett bilden, die die Kennzeichnung der CD unprofessionell erscheinen lassen.

Ein weiterer Nachteil wird darin gesehen, dass die Handhabbarkeit der Vorrichtung zu kompliziert ist und damit die Kosten für die gesamte Kennzeichnung einer CD unnötig erhöht werden.

Daher ist es Aufgabe der vorliegenden Erfindung, ein Verfahren und eine Vorrichtung zur Etikettierung scheibenförmiger Informationsträger bereitzustellen, die einfach in der Handhabung und kostengünstig in der Herstellung sind und eine akzeptable Qualität, die den Anforderungen von Hochgeschwindigkeitslaufwerken genügt, gewährleisten.

Diese Aufgabe wird mit den kennzeichnenden Merkmalen der unabhängigen Hauptansprüche gelöst.

Weitere erfindungswesentliche Merkmale sind den Unteransprüchen zu entnehmen.

Gemäß dem erfindungsgemäßen Verfahren zur Etikettierung eines scheibenförmigen Informationsträgers auf der der informationstragenden Seite gegenüberliegenden Seite mit einem Zentralloch mit einem selbstklebenden bedruckten Etikett mit einer zentralen Ausnehmung mittels einer Zentrierhilfe, ist dadurch gekennzeichnet, dass die zentrale Ausnehmung des selbstklebenden bedruckten Etiketts über das Zentralloch des Informationsträgers zentrierend gesetzte wird und unter Krümmung des Etiketts geführt wird, bis eine gerade Linie die informationsfreie Seite des Informationsträgers berührt und danach ein Absenken der durch die Krümmung nach oben weisenden Enden des Etiketts erfolgt.

Vorteilhaft an dem erfindungsgemäßen Verfahren ist es, dass die Beschriftung und/oder Bemalung des Etiketts mittels eines geeigneten Computerprogramms entworfen wird und mit einem geeigneten Drucker ausgedruckt wird.

Ferner ist es vorteilhaft, das auf den Informationsträger aufzubringende Etikett auf einer Folie genormten Maßes vorgestanzt ist, wobei das Material der Folie hitzebeständig ist und aus einem geeigneten Polyester besteht.

Vorteilhaft ist es auch, dass der Informationsträger mit seiner informationstragenden Seite beim Auftragen des Etiketts auf eine weiche ebene Unterlage gelegt wird.

Von Vorteil ist es ferner, dass die Folie des vorgedruckten und vorgestanzten Etiketts von der Trägerfolie gelöst wird, um dann mit Hilfe der bereitgestellten Zentrierhilfe auf die Oberfläche des Informationsträgers gebracht zu werden.

Weiterhin ist es vorteilhaft, dass die Zentrierhilfe aus dem Zentralloch des Informationsträgers herausgenommen wird und das Etikett durch leichten Druck von innen nach außen blasenfrei festgestrichen wird.

Ein ganz besonderer Vorteil ist darin zu sehen, dass mit Hilfe der weiter unten zu beschreibenden Zentrierhilfe die Größe des Durchmessers des zentralen Lochs des Etiketts auf ein Maß gebracht werden kann, das in etwa dem Durchmesser des Zentrallochs der CD entspricht und nur geringfügig größer ist.

Die erfindungsgemäße Zentrierhilfe zur Etikettierung eines scheibenförmigen Informationsträgers mit einem Zentralloch, mit einem selbstklebenden bedruckten Etiketts auf der der informationstragenden Seite gegenüberliegenden Seite ist gekennzeichnet durch einen kegelstumpfartigen Abschnitt über einem zylindrischen Abschnitt, der der zu etikettierenden Seite des Informationsträgers zugewandt ist; und unterhalb des. zylindrischen Teils ein kurzer Zapfen angeordnet ist, der passgenau in das Zentralloch des Informationsträgers passt und nicht länger als die Dicke des Informationsträgers ist; und der Außendurchmesser (D) des zylindrischen Teils größer als 15 mm ist.

Ein weiteres Ausführungsbeispiel der Zentrierhilfe ist dadurch gekennzeichnet, dass der kegelstumpfartige Abschnitt und der zylindrische Abschnitt mittig von einer konischen Bohrung durchdrungen ist, in die passgenau ein konisches Teil eingesetzt wird, das am unteren Ende einen kurzen Zapfen aufweist, der in etwa dem Durchmesser (d) des Zentrallochs des Informationsträgers entspricht; und der größere Durchmesser (D1) der konischen Bohrung bzw. des passgenauen konischen Teils größer als 15 mm ist.

Vorteilhaft an der erfindungsgemäßen Zentrierhilfe ist es, dass die untere Fläche des zylindrischen Teils hinterdreht ist, wodurch ein sicherer Sitz der Zentrierhilfe auf der Oberfläche der CD gewährleistet ist, weil lediglich ein scharfer Rand des Außendurchmessers des zylindrischen Teils der Zentrierhilfe auf der CD liegt und somit einen exakten Sitz und glattes Aufliegen der Zentrierhilfe auf der Oberfläche gewährleistet.

Ein entscheidender Vorteil gegenüber dem Stand der Technik ist in der Einfachheit der erfindungsgemäßen Zentrierhilfe bzw. dem Verfahren zu sehen. Die Zentrierhilfe besteht, wie bereits erwähnt, vorteilhaft aus einem kegelstumpfartigen Teil, der über einen zylindrischen Teil angeordnet ist, so dass das zentrale Loch in dem Etikett zunächst in einfacher Weise über den kegelstumpfartigen Teil der Zentrierhilfe geführt und anschließend kurzzeitig passend über dem zylindrischen Teil gehalten. Dadurch ist es praktisch unmöglich, dass sich zwischen CD und dem Etikett beim Absenken der beiden Enden des gekrümmten Etiketts kleine Luftblaseneinschlüsse bzw. Blasen bilden können, da die Klebung von der von der zuerst berührenden geraden Linie zu beiden Seiten der Linie gleichzeitig erfolgt, indem die Enden des gekrümmten Etiketts gleichmäßig und allmählich abgesenkt werden. Das Absenken der beiden Enden geschieht mit beiden Händen, wobei die Enden mit den Fingerspitzen leicht gehalten werden.

Im nun Folgenden wird die Erfindung anhand von Zeichnungen im Detail näher erläutert. Es zeigt:
- Fig. 1:: eine Explosionsdarstellung der erfindungsgemäßen Vorrichtung mit dem zu kennzeichnenden Informationsträger (1);
- Fig. 2:: die Seitenansicht der erfindungsgemäßen Vorrichtung mit eingesetzter Zentrierhilfe (16) auf den Informationsträger (1) und dem gekrümmten Etikett (2) über den zu kennzeichnenden Informationsträger (1);
- Fig. 3:: die Draufsicht der erfindungsgemäßen Vorrichtung mit dem gekrümmten Etikett (2) über dem Informationsträger (1);
- Fig. 4:: eine Schnittdarstellung der erfindungsgemäßen Zentrierhilfe (6);

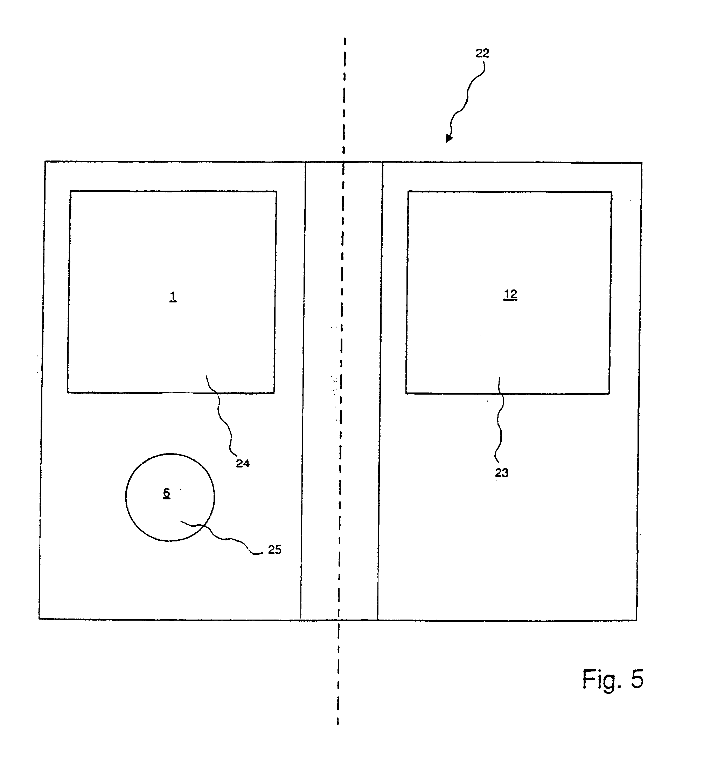

- Fig. 5:: das aufklappbare Behältnis (22) mit den eingeprägten Profilen (23, 24, 25);
- Fig. 6:: eine Schnittdarstellung einer weiteren erfindungsgemäßen Zentrierhilfe (28), die in die konische Bohrung (27) der Zentrierhilfe (6) eingesetzt ist.

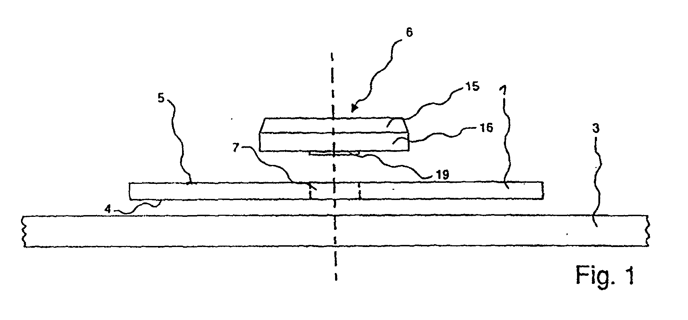

In Fig. 1 ist eine Explosionsdarstellung mit den wesentlichen Bestandteilen der erfindungsgemäßen Vorrichtung gezeigt. Der zu bedruckende Informationsträger 1 wird auf eine ebene glatte Unterlage 3 gelegt. Die Unterlage 3 kann zum Beispiel die Unterlage für eine "Maus" eines Computers sein. Der Informationsträger 1 ist so auf die Unterlage 3 zu legen, daß die informationsfreie Seite 5 der CD-Scheibe nach oben weist. In das Zentralloch 7 des Informationsträgers 1 wird der Zapfen 19 der Zentrierhilfe 6 paßgenau eingeführt. Die Zentrierhilfe 6 wird weiter unten näher beschrieben.

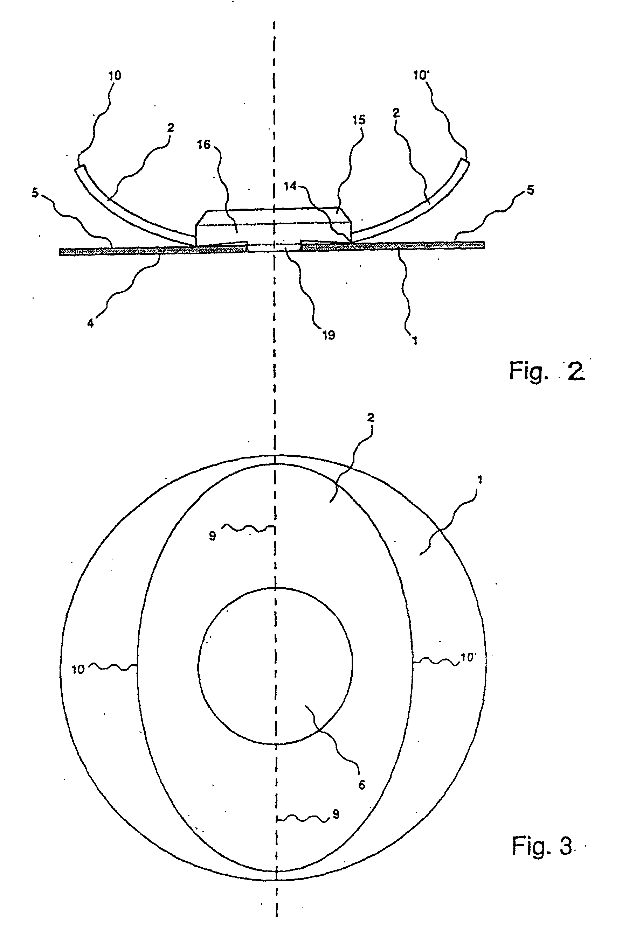

Fig. 2 zeigt in einer Teilschnittdarstellung das erfindungsgemäße Verfahren zur Kennzeichnung eines Informationsträgers 1 mit einem Etikett 2. Der Zapfen 19 der Zentrierhilfe 6 wird paßgerecht in das Zentralloch 7 des Informationsträgers 1 eingeführt, so daß der scharfkantige Rand 14 der Zentrierhilfe 6 auf der Oberfläche der informationsfreien Seite 5 des Informationsträgers 1 zu liegen kommt. Nachdem der Informationsträger 1 plan auf der Unterlage 3 lagert und die Zentrierhilfe 6 in das Zentralloch 7 eingeführt ist, wird das Etikett 2 von der Trägerfolie 13 gelöst und an sich gegenüberliegenden Enden 10, 10' mit den Fingerspitzen erfaßt und im gekrümmten Zustand mit dem zentralen Loch 8 über die Zentrierhilfe 6 geführt. Dabei ist es äußerst hilfreich, daß die Zentrierhilfe 6 im oberen Teil einen konischen Aufsatz 15 aufweist und somit ein müheloses Auffinden und Zentrieren des Etiketts 2 gewährleistet.

In Fig. 3 ist die Draufsicht aus Fig. 2 gezeigt. Über dem Informationsträger 1 wird das Etikett 2 im gekrümmten Zustand gehalten und langsam in zentraler Lage mit Hilfe der Zentrierhilfe 6 auf die Oberfläche der informationsfreien Seite 5 der CD-Scheibe 1 abgesenkt, so daß die Klebeschicht 21 unter dem gekrümmten Etikett 2 mit einer geraden Linie 9 auf die Oberfläche der informationsfreien Seite 5 stößt. Anschließend werden die beiden Enden 10, 10' des Etiketts 2 langsam so abgesenkt, daß die Klebeschicht fortlaufend von der Mittellinie 9 ausgehend nach außen hin die Oberfläche 5 des Informationsträgers 1 berührt. Dadurch wird erreicht, daß die Klebung auf dem Informationsträger 1 ohne Einschluß von Luftblasen erfolgt. Nachdem die Enden 10, 10' vollständig abgesenkt sind, ist mit den Fingern oder einem weichen Gegenstand von innen nach außen über das Etikett zu streichen, damit die Klebung vollständig wird.

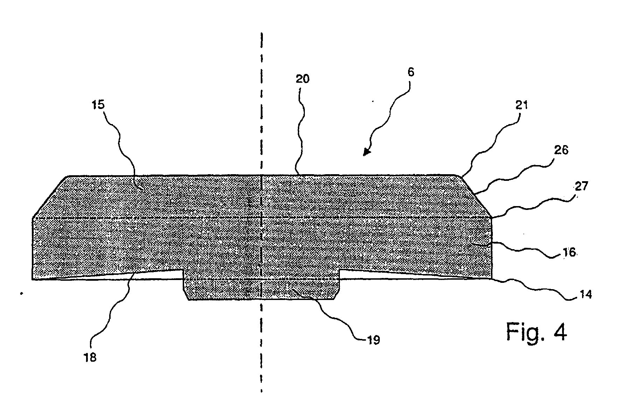

In Fig. 4. ist die Zentrierhilfe 6 in einer Schnittdarstellung gezeigt. Die Zentrierhilfe 6 setzt sich aus einem kegelstumpfartigen Teil 15 und einem zylindrischen Teil 16 zusammen, wobei der kegelstumpfartige Teil 15 über dem zylindrischen Teil 16 angeordnet ist. Die Oberfläche 20 des kegelstumpfartigen Teils 15 ist vollkommen eben. Der Übergang 21 von der ebenen Fläche 20 zu den Schenkeln 26 des kegelstumpfartigen Teils 15 ist fließend und abgerundet. Der Übergang 27 vom kegelstumpfartigen Teil 15 zum zylindrischen Teil 16 ist dagegen scharfkantig im vorliegenden Ausführungsbeispiel. Dieser Übergang 27 kann jedoch auch fließend ausgeführt werden. Maßgeblich für den guten Sitz der Zentrierhilfe auf der informationsfreien Seite 5 des Informationsträgers 1 ist die scharfe Kante 14 an der unteren Seite des zylindrischen Teils 16. Die scharfe Kante 14 dient als Auflage auf der Oberfläche der informationsfreien Seite 5. Die Scharfkantigkeit wird dadurch erreicht, daß die untere Fläche 18 der Zentrierhilfe 6 leicht hinterdreht ist. Mittig befindet sich ein Zapfen 19, der so lang ist, daß er in das Zentralloch 7 des Informationsträgers 1 eingepaßt werden kann, ohne die Unterlage 3 störend zu berühren. Im vorliegenden Ausführungsbeispiel ist der Zapfen 19 ca. 1,2 mm länger als die Höhe der Teile 15 und 16 der Zentrierhilfe 6. Der Durchmesser des zylindrischen Teils 16 der Zentrierhilfe 6 beträgt im vorliegenden Ausführungsbeispiel 44 mm. Dieses Maß ist für die derzeit gebräuchlichste Ausführungsform einer CD-Scheibe ein Idealmaß, das in den Schutzumfang der Hauptansprüche fällt.

Einzelteile der erfindungsgemäßen Vorrichtung werden in einem aufklappbaren Behältnis 22 aufbewahrt. Das Behältnis 22 weist im Inneren mehrere Vertiefungen 23, 24, 25 auf, in die die benötigten Gegenstände zur Durchführung des erfindungsgemäßen Verfahrens paßgerecht eingelegt sind. Die Hülle, in der die CD-Scheibe verpackt ist, befindet sich in der Ausnehmung bzw. Vertiefung 24. Die vorgefertigten unbedruckten Folien 12 werden in der Ausnehmung 23 gelagert, während die Zentrierhilfe 6 in der Ausnehmung 25 eingepaßt ist. Das ganze Ensemble ist zusammenklappbar und kann in einem sogenannten Spin-up-Kit dem Endverbraucher angeboten werden.

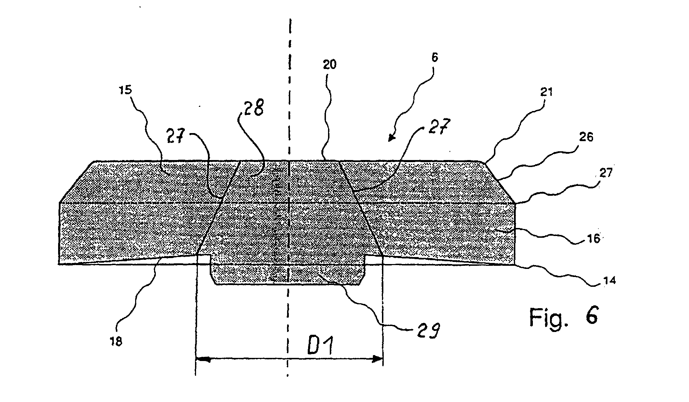

In Fig. 6 wird ein weiteres Ausführungsbeispiel zweier Zentrierhilfen 6, 28 in einer Schnittdarstellung gezeigt. Die oben genannte Zentrierhilfe 6 ist mittig von einer konischen Bohrung 27 durchdrungen. In diese konische Bohrung 27 wird ein ebenfalls konischer Kegelstumpf 28 paßgenau eingesetzt, so daß dieses Teil 28 bei Bedarf herausgenommen werden kann und als selbständige kleinere Zentrierhilfe verwendet wird. Im eingesetzten Zustand des konischen Teils 28 entspricht die Zentrierhilfe genau derjenigen, die in Fig. 4 im Detail beschrieben wurde. Der größere Durchmesser D1 des Kegelstumpfs ist vaxiabel zu wählen und reicht von 15 mm im Durchmesser bis 23 mm im Durchmesser. Der Zapfen 29 ist ebenfalls leicht konisch ausgebildet, so daß der Zapfen 29 im eingesetzten Zustand in das Zentralloch 7 der CD-Scheibe leicht klemmend mit dem Rand. des Zentralloches 7 im Eingriff steht. Die Länge des Zapfens 29 sollte so gewählt werden, daß sie nicht über die maximale Stärke der CD-Scheibe hinausragt. Mit der Zentrierhilfe 28 ist es somit möglich, Etiketten 2 auf die Rückseite der CD-Scheibe nach dem erfindungsgemäßen Verfahren aufzukleben, deren zentrales Loch 8 nur geringfügig größer als 15 mm ist, was dem Durchmesser des Zentralloches 7 der CD-Scheibe entspricht. Mit einer derartigen erfindungsgemäßen Zentrierhilfe steht dem Anwender somit die gesamte Fläche einer Seite der CD-Scheibe zur Beschriftung oder Bemalung zur Verfügung. Wichtig dabei ist es, daß der Durchmesser des Durchbruchs in dem Etikett 2 in etwa so groß ist, wie der Durchmesser des Zentralloches 7 in der CD-Scheibe.

## Patentansprüche

1. Verfahren zur Etikettierung eines scheibenförmigen Informationsträgers (1) mit einem Zentralloch (7) mit einem selbstklebenden bedruckten Etikett (2) mit einer zentralen Ausnehmung (8) auf der der informationstragenden Seite (4) gegenüberliegenden Seite (5) mittels einer Zentrierhilfe, **dadurch gekennzeichnet, dass** die zentrale Ausnehmung (8) des selbstklebenden bedruckten Etiketts (2) über das Zentralloch (7) des Informationsträgers (1) zentrierend gesetzt wird und unter Krümmung des Etiketts (2) geführt wird, bis eine gerade Linie (9) die informationsfreie Seite (5) des Informationsträgers (1) berührt und danach ein Absenken der durch die Krümmung nach oben weisenden Enden (10, 10') des Etiketts (2) erfolgt.

2. Verfahren nach Anspruch 1, **dadurch gekennzeichnet, dass** die Beschriftung und/oder Bemalung des Etiketts (2) mittels eines geeigneten Programms auf dem Computer entworfen wird.

3. Verfahren nach Anspruch 1 und 2, **dadurch gekennzeichnet, dass** die entworfene Bedruckung auf einer hitzebeständigen vorgestanzten Folie mittels eines geeigneten Druckers ausgedruckt wird.

4. Verfahren nach Anspruch 1, **dadurch gekennzeichnet, dass** der Informationsträger (1) mit einer informationstragenden Seite (4) auf eine weiche ebene Unterlage (3) gelegt wird.

5. Verfahren nach Anspruch 1, **dadurch gekennzeichnet, dass** die Folie des vorgedruckten ausgestanzten Etiketts (2) von der Trägerfolie (13) gelöst wird.

6. Verfahren nach Anspruch 1, **dadurch gekennzeichnet, dass** die Zentrierhilfe (6) aus dem Zentralloch (7) des Informationsträgers (1) herausgenommen wird und das Etikett (2) durch leichten Druck von innen nach außen blasenfrei festgestrichen wird.

7. Verfahren nach einem der vorangegangenen Ansprüche, **dadurch gekennzeichnet, dass** das in die konische Bohrung (27) eingesetzte konische Teil (28), das allein als Zentrierhilfe verwendet wird, herausgenommen wird und der Zapfen (19) in das Zentralloch (7) der CD (1) eingesetzt wird, um anschließend das aufzuklebende Etikett (2) über das konische Teil (28) mit der zentralen Ausnehmung (8) des Etiketts (1) geführt wird, wobei das Etikett (2) bis an das Zentralloch (7) des Informationsträgers (1) herangeführt wird.

8. Zentrierhilfe zur Etikettierung eines scheibenförmigen Informationsträgers mit einem Zentralloch (7), mit einem selbstklebenden bedruckten Etikett (2) auf der der informationstragenden Seite (4) gegenüberliegenden Seite (5), **gekennzeichnet durch**
- einen kegelstumpfartigen Abschnitt (15) über einem zylindrischen Abschnitt (16), der der zu etikettierenden Seite (5) des Informationsträgers (1) zugewandt ist; und
- unterhalb des zylindrischen Teils (16) ein kurzer Zapfen (19) angeordnet ist, der passgenau in das Zentralloch (7) des Informationsträgers (1) passt und nicht länger als die Dicke des Informationsträgers (1) ist; und
- der Außendurchmesser (D) des zylindrischen Teils (16) größer als 15 mm ist.

9. Vorrichtung nach Anspruch 8, **dadurch gekennzeichnet, dass** die untere Fläche (18) des zylindrischen Teils (16) hinterdreht ist.

10. Vorrichtung nach Anspruch 8, **dadurch gekennzeichnet, dass** die obere Fläche (20) des kegelstumpfartigen Teils (15) der Zentrierhilfe (6) eben ist.

11. Vorrichtung nach Anspruch 8 und 10, **dadurch gekennzeichnet, dass** die obere Kante (17) des kegelstumpfartigen Teils (15) leicht gerundet ist.

12. Zentrierhilfe zur Etikettierung eines scheibenförmigen Informationsträgers mit einem Zentralloch (7), mit einem selbstklebenden bedruckten Etikett (2) auf der der informationstragenden Seite (4) gegenüberliegenden Seite (5), bestehend aus zwei Teilen (15, 28), **dadurch gekennzeichnet,**
- **dass** der kegelstumpfartige Abschnitt (15) und der zylindrische Abschnitt (16) mittig von einer konischen Bohrung (27) durchdrungen ist, in die passgenau ein Teil (28) eingesetzt wird, das am unteren Ende einen kurzen Zapfen (29) aufweist, der in etwa dem Durchmesser (d) des Zentrallochs (7) des Informationsträgers (1) entspricht; und
- der größere Durchmesser (D1) der konischen Bohrung (27) und des passgenauen Teils (28) größer als 15 mm ist.

13. Zentrierhilfe nach Anspruch 12, **dadurch gekennzeichnet, dass** das Übermaß des Durchmessers (D1) des größeren Durchmessers (D1) im zehntel-Millimeter-Bereich liegt.

## Claims

1. Process for labelling a disc-shaped information medium (1) with a central hole (7), using a self-adhesive printed label (2) with a central recess (8) on the side (5) opposite to the side carrying the information (4), labelling being achieved by means of a centering aid. The process is **characterised in that** the central recess (8) of the self-adhesive printed label (2) is placed in a central position over the central hole (7) of the information medium (1), and while bending the label (2) is moved into position until a straight line (9) touches the information-free side (5) of the information medium (1). The ends (10, 10') of the label (2), which are pointing upwards through bending, are then lowered.

2. Process according to claim 1 **characterised in that** the printing and/or painting of the label (2) is designed on a computer by means of a suitable programme.

3. Process according to claims 1 and 2 **characterised in that** the designed printing is printed on a heat-resistant, prepunched foil by means of a suitable printer.

4. Process according to claim 1 **characterised in that** the information medium (1) is placed with the information carrying side (4) on a soft, level base.

5. Process according to claim 1 **characterised in that** the foil of the preprinted, punched out label (2) is separated from the carrier foil (13).

6. Process according to claim 1 **characterised in that** the centering aid (6) is removed from the central hole (7) of the information medium (1), and the label (2) is rubbed on firmly, free of bubbles, by applying slight pressure from inside to outside.

7. Process according to one of the previous claims **characterised in that** the tapered part (28), which is inserted in the tapered borehole (27) and is used only as the centering aid, is removed, and the pin (19) inserted into the central hole (7) of the CD (1), in order that the label to be stuck on (2) can then be positioned over the tapered part (28) with the central recess (8) of the label, the label (2) being brought right up to the central hole (7) of the information medium (1).

8. Centering aid for labelling a disc-shaped information medium with a central hole (7) using a self-adhesive printed label (2) on the side (5) opposite to the side carrying the information (4), **characterised in that**
- a tapered section (15) over a cylindrical section (16) faces the side (5) of the information medium (1) to be labelled, and
- a short pin (19) is located below the cylindrical section (16), this fitting exactly into the central hole (7) of the information medium (1) and being not longer than the thickness of the information medium (1), and
- the outside diameter (D) of the cylindrical section (16) is greater than 15 mm.

9. Device according to claim 8 **characterised in that** the lower surface (18) of the cylindrical section (16) is relieved.

10. Device according to claim 8 **characterised in that** the upper surface (20) of the tapered section (15) of the centering aid (6) is level.

11. Device according to claims 8 and 10 **characterised in that** the upper edge (17) of the tapered section (15) is slightly rounded.

12. Centering aid for labelling a disc-shaped information medium with a central hole (7) using a self-adhesive printed label (2) on the side (5) opposite to the side carrying the information (4), consisting of two parts (15, 28), **characterised in that**
- the tapered section (15) and the cylindrical section (16) are drilled through the centre with a tapered borehole (27), in which a part (28) with a short pin (29) located at the lower end corresponding approximately to the diameter (d) of the central hole (7) of the information medium (1) is inserted to fit exactly, and
- the larger diameter (D1) of the tapered borehole (27) and the exactly fitting part (28) is more than 15 mm.

13. Centering aid according to claim 12 **characterised in that** over-dimensioning of the diameter (D1) of the larger diameter (D1) is in a tenth of a millimetre range.

## Revendications

1. Procédé d'étiquetage d'un support d'informations en forme de disque (1) avec un trou central (7) avec une étiquette autocollante imprimée(2) avec un creux central (8) sur le côté opposé (5) du côté porteur d'informations (4) au moyen d'un élément auxiliaire de centrage **caractérisé en ce que** le creux central (8) de l'étiquette autocollante imprimée (2) est centré sur le trou central (7) du support d'informations (1) et sous le cintrage de l'étiquette (2) est guidé jusqu'à ce qu'une ligne droite (9) touche le côté vierge (5) du support d'informations (1) et qu'ensuite un rabattement des extrémités de l'étiquette (2) se relevant du fait du cintrage (10, 10') ait lieu.

2. Procédé selon la revendication 1, **caractérisé en ce que** le marquage et /ou l'impression de l'étiquette (2) est conçue par ordinateur au moyen d'un programme approprié.

3. Procédé selon les revendications 1 et 2,
**caractérisé en ce que** le marquage conçu est imprimé sur une feuille prédécoupée résistante aux températures élevées au moyen d'une imprimante appropriée.

4. Procédé selon la revendication 1, **caractérisé en ce que** le support d'informations (1) avec un côté porteur d'informations (4) est posé sur une base souple plane (3).

5. Procédé selon la revendication 1, **caractérisé en ce que** la feuille de l'étiquette préimprimée découpée à la matrice (2) se détache de la feuille support (13).

6. Procédé selon la revendication 1, **caractérisé en ce que** l'élément auxiliaire de centrage (6) est ôté du trou central (7) du support d'informations (1) et l'étiquette (2) est bien étalée sans bulles en appuyant légèrement de l'intérieur vers l'extérieur.

7. Procédé selon une des revendications précédentes, **caractérisé en ce que** la partie conique (28) utilisée à elle-seule comme élément auxiliaire de centrage, et placée dans le creux conique (27), est ôtée et le pivot (19) est placé dans le trou central (7) du CD (1) afin qu'ensuite l'étiquette autocollante (2) soit guidée sur la partie conique (28) avec le creux central (8) de l'étiquette (1), l'étiquette étant approchée jusqu'au trou central (7) du support d'informations (1).

8. L'élément auxiliaire de centrage pour étiquetage d'un support d'informations en forme de disque avec un trou central (7), avec une étiquette autocollante imprimée (2) sur le côté opposé (5) du côté porteur d'informations (4), **caractérisé par**
- une partie tronconique (15) sur une partie cylindrique (16) qui est tournée vers le côté à étiqueter (5) du support d'informations et
- en dessous de la partie cylindrique (16) est placé un court pivot (19) qui s'ajuste exactement dans le trou central (7) du support d'informations (1) et ne dépasse pas l'épaisseur du support d'informations (1), et
- le diamètre extérieur (D) de la partie cylindrique (16) est supérieur à 15 mm.

9. Dispositif selon la revendication 8, **caractérisé en ce que** la surface inférieure (18) de la partie cylindrique (16) est dégagée au tour.

10. Dispositif selon la revendication 8, **caractérisé en ce que** la surface supérieure (20) de la partie tronconique (15) de l'élément auxiliaire de centrage (6) est lisse.

11. Dispositif selon les revendications 8 et 10, **caractérisé en ce que** le bord supérieur (17) de la partie tronconique (15) est légèrement arrondie.

12. L'élément auxiliaire de centrage pour étiquetage d'un support d'informations en forme de disque avec trou central (7), avec étiquette autocollante imprimée (2) sur le côté opposé (5) du côté porteur d'informations (4), se constituant de deux parties (15, 28), **caractérisé en ce que**
- la partie tronconique (15) et la partie cylindrique (16) est pénétrée au centre d'un trou conique (27) dans lequel est ajustée une partie (28) présentant à l'extrémité inférieure un pivot court (29) qui correspond à peu près au diamètre (d) du trou central (7) du support d'informations (1), et
- le diamètre supérieur (D1) du trou conique (27) et de la partie ajustée (28) est supérieur à 15 mm.

13. Elément auxiliaire de centrage selon la revendication 12, **caractérisé en ce que** la surmesure du diamètre (D1) du diamètre supérieur (D1) se situe dans le domaine du dixième de millimètres.
